# EUROPÄISCHE PATENTSCHRIFT

(11) **EP 2 897 873 B1**
(45) Veröffentlichungstag und Bekanntmachung des Hinweises auf die Patenterteilung: **25.09.2019**
(21) Anmeldenummer: 13700168.1
(22) Anmeldetag: 10.01.2013
(51) Int. Cl.: B65D 1/02, B65D 41/17, C03B 9/325, C03B 9/34

(54) **FLASCHENMUNDSTÜCK FÜR DREHKRONKORKEN UND MIT ABSPLITTERUNGSSCHUTZ**
BOTTLE OPENING FOR TWIST-OFF CROWN CAP WITH SPLINTERING PROTECTION
OUVERTURE DE BOUTEILLE POUR CAPSULE À VIS POURVUE D'UNE PROTECTION ANTI-ÉBRÉCHAGE

(30) Priorität: 19.09.2012 DE 202012103589 U; 19.09.2012 AT 3702012 U
(43) Veröffentlichungstag der Anmeldung: 29.07.2015
(73) Patentinhaber: Vetropack Holding AG, CH-8180 Bülach (CH)
(72) Erfinder: MAYER, Engelbert, A-3375 Krummnussbaum (AT)
(74) Vertreter: Dilg, Haeusler, Schindelmann Patentanwaltsgesellschaft mbH
(86) Internationale Anmeldenummer: PCT/EP2013/050421
(87) Internationale Veröffentlichungsnummer: WO 2014/044409

(56) Entgegenhaltungen:
- BE-A- 660 048
- CH-A- 457 168
- DE-C- 230 105
- DE-U1- 29 515 026
- DE-U1- 29 822 885
- GB-A- 274 635
- GB-A- 2 100 236
- US-A- 2 265 015
- US-A- 3 203 576
- US-A- 3 774 795
- US-A- 5 806 700
- US-A- 5 893 942
- US-A1- 2006 144 092
- US-A1- 2012 000 879
- CE.T.I.E. GME 14.02 Edition 07/03 XP055480153

## Beschreibung

Die Erfindung betrifft ein Mundstück für eine Flasche, eine Flasche mit einem solchen Mundstück, ein Werkzeug zum Herstellen eines Mundstücks, ein Verfahren zum Herstellen eines Mundstücks und ein Verfahren zum Herstellen einer Flasche.

Aus dem Stand der Technik sind unterschiedlichste Verschlüsse für Flaschen, zum Beispiel Getränkeflaschen bekannt. Ein solcher herkömmlicher Flaschenverschluss verwendet einen Kronkorken. Seit einiger Zeit werden aber auch Drehkronkorken eingesetzt, die von einem Benutzer mittels Drehens von einer Flasche abgenommen werden, um diese zu öffnen. Ein solcher Drehkronkorken kann als Blechteil mit einer Dichtung ausgebildet werden, das auf einem Mundstück einer Flasche mit Gewinde angeformt wird, womit ein entsprechendes Gegengewinde ausgebildet wird.

In der Flaschenindustrie wird ein solches Drehkronenmundstück gemäß einer Spezifikation des internationalen Zentrums für Abfüll- und Verpackungstechnik (CE.T.I.E.) hergestellt. Ein solches Drehkronenmundstück mit den Merkmalen des Oberbegriffs des Anspruchs 1 wird unter der Bezeichnung 26 H 126 geführt (CE.T.I.E., Dokumentationsblatt 14.02, Ausgabe 07/03).

Solch ein Drehkronenmundstück wird mittels dreier Werkzeugteile hergestellt. Zwischen zwei Mündungsbacken, die zusammensetzbar sind, ist eine Aussparung gebildet, die eine Mündungserzeugungsform definiert, d.h. eine Negativform des herzustellenden Drehkronenmundstücks. Damit ist das Ausbilden eines Mundstückkörpers mit einem Glasgewinde vorgegeben. Um die Flasche aus der Gießform entnehmen zu können, wird ein drittes Werkzeugteil eingesetzt, nämlich eine Führungsscheibe, die in einer anderen Aussparung der Mündungsbacken aufgenommen wird und die ein Ausgießende der Flasche definiert. An einer Grenzfläche zwischen Mündungsbacken und Führungsscheibe kommt es zwangsweise zum Ausbilden einer Stufe bzw. eines Grats knapp unterhalb der Oberseite der Flasche.

Bei Drehkronenmundstücken 26 H 126 ist es bisher unerklärlicherweise in vereinzelten Fällen zu Absplitterungen gekommen, wenn ein Benutzer den Drehkronkorken von dem Mundstück entfernt. Dies ist insbesondere bei Getränkeflaschen gefährlich, da Glassplitter in die Flasche eindringen können, so dass ein Benutzer diese beim Trinken verschlucken kann. Auch können resultierende scharfe Kanten am Mundstück der Flasche zu Verletzungen bei einem Benutzer führen.

GB 2 100 236 A offenbart ein anderes gattungsgemäßes Drehkronenmundstück sowie einen Flaschenhals mit einem Ring und einem Gewinde, auf das ein Kronkorken aufschraubbar und von dem der Kronkorken abschraubbar ist.

US 2012/000879 A1 offenbart einen Plastikbehälter mit einem Endstück. Das Endstück hat eine zylindrische Seitenwand, an der ein Gewinde vorgesehen ist. Zwischen einem oberen Rand des Endstücks und dem Gewinde ist eine umfängliche Nut vorgesehen, die sich um die zylindrische Seitenwand herum erstreckt. Diese Nut soll die strukturelle Festigkeit des Endstücks verbessern, womit eine hitzebedingte Deformation unterdrückt werden soll sowie die Übertragung von Drehmoment beim Öffnen des Behälters reduziert.

DE 298 22 885 U1 offenbart eine Halbschale eines zweischaligen Mündungsformwerkzeugs mit einer rillenförmigen Ausnehmung, in die ein Führungsring mit einem flanschartigen Ansatz an einem zylindrischen Führungsabschnitt aufnehmbar ist. Eine solche Anordnung wird für die maschinelle Hohlglasfertigung verwendet.

Es ist eine Aufgabe der vorliegenden Erfindung, ein Mundstück für eine Flasche mit Drehkronkorkenverschluss sowie die Mittel zu dessen Herstellung bereitzustellen, mit dem ein Absplittern von Material des Mundstücks beim Abnehmen des Drehkronkorkens vermieden ist.

Diese Aufgabe wird durch die Gegenstände mit den Merkmalen gemäß den unabhängigen Ansprüchen gelöst. Weitere Ausführungsbeispiele sind in den abhängigen Ansprüchen gezeigt.
Gemäß einem Ausführungsbeispiel der vorliegenden Erfindung ist ein Mundstück für eine Flasche mit Drehkronkorkenverschluss geschaffen, wobei das Mundstück einen Mundstückkörper mit einer endseitigen Ausgießöffnung (die auch als Ausgießende bezeichnet werden kann), ein Verschlussgewinde zum Zusammenwirken mit einem Drehkronkorken zum flüssigkeitsdichten, insbesondere auch gasdichten, Verschließen der Ausgießöffnung, das in Form von mehreren teilumfänglich mit einer vorgebbaren Gewindesteigung um den Mundstückkörper umlaufenden und gegenüber dem Mundstückkörper außenseitig überstehenden Gewindeüberständen gebildet ist, und eine zwischen der Ausgießöffnung und dem Verschlussgewinde angeordnete, umfänglich um den Mundstückkörper umlaufende Diskontinuität aufweist, die beim Herstellen des Mundstücks werkzeugbedingt an einem Übergang zwischen zwei Mündungsbacken einerseits und einer Führungsscheibe andererseits entsteht, wobei ein außenseitiges Ende der Diskontinuität gegenüber einer Außenfläche des Mundstückkörpers zwischen axial (insbesondere bezogen auf eine Flaschensymmetrieachse) benachbarten Gewindeüberständen nach innen hin versetzt ist.

Gemäß einem weiteren Ausführungsbeispiel der vorliegenden Erfindung ist eine Flasche bereitgestellt, die ein Mundstück mit den oben beschriebenen Merkmalen und einen daran angeschlossenen und damit einstückig ausgebildeten Flaschenkörper aufweist. Der Flaschenkörper kann dabei zum Beispiel aus stoffschlüssig miteinander verbundenen Flaschenkörperformhälften und einem Fertigformboden gefertigt sein.

Gemäß noch einem anderen Ausführungsbeispiel der vorliegenden Erfindung ist ein Werkzeug zum Herstellen eines Mundstücks für eine Flasche mit Drehkronkorkenverschluss geschaffen, wobei das Werkzeug zwei Mündungsbacken und eine Führungsscheibe (d.h. drei Werkzeugteile) aufweist, die in einer Führungsscheibenaufnahme formschlüssig aufnehmbar ist, welche Führungsscheibenaufnahme in einem zusammengesetzten Zustand der Mündungsbacken zwischen diesen gebildet ist, wobei - in dem zusammengesetzten und die Führungsscheibe aufnehmenden Zustand der Mündungsbacken - von den Mündungsbacken und der Führungsscheibe eine derart geformte Mündungserzeugungsform (anschaulich eine Negativform der Außenseite des herzustellenden Mundstücks) begrenzt wird, dass mittels Zuführens von fließfähigem Mundstückrohmaterial (insbesondere flüssigem Glas) in die Mündungserzeugungsform zwischen den Mündungsbacken ein Mundstückkörper ausbildbar ist, mittels der Führungsscheibe eine endseitige Ausgießöffnung an dem Mundstückkörper begrenzt ist, zwischen den Mündungsbacken ein Verschlussgewinde zum Zusammenwirken mit einem Drehkronkorken zum flüssigkeitsdichten Verschließen der Ausgießöffnung ausbildbar ist, das in Form von mehreren teilumfänglich mit einer vorgebbaren Gewindesteigung um den Mundstückkörper umlaufenden und gegenüber dem Mundstückkörper außenseitig überstehenden Gewindeüberständen gebildet ist, und an einem Übergang zwischen den zwei Mündungsbacken einerseits und der Führungsscheibe andererseits eine zwischen der Ausgießöffnung und dem Verschlussgewinde angeordnete, umfänglich um den Mundstückkörper umlaufende Diskontinuität ausbildbar ist, wobei ein an die Führungsscheibe angrenzender Endabschnitt der Mündungsbacken derart geformt ist, dass ein außenseitiges Ende der Diskontinuität gegenüber einer Außenfläche des Mundstückkörpers zwischen axial benachbarten Gewindeüberständen nach innen hin versetzt ist.

Gemäß noch einem anderen Ausführungsbeispiel der vorliegenden Erfindung ist ein Verfahren zum Herstellen eines Mundstücks für eine Flasche mit Drehkronkorkenverschluss geschaffen, wobei bei dem Verfahren eine Führungsscheibe in einer Führungsscheibenaufnahme formschlüssig aufgenommen wird, die mittels Zusammensetzens von zwei Mündungsbacken zwischen diesen gebildet ist, wobei in dem zusammengesetzten und die Führungsscheibe aufnehmenden Zustand der Mündungsbacken von den Mündungsbacken und der Führungsscheibe eine Mündungserzeugungsform begrenzt wird, fließfähiges Mundstückrohmaterial der Mündungserzeugungsform zugeführt wird, wodurch zwischen den Mündungsbacken ein Mundstückkörper ausgebildet wird, mittels der Führungsscheibe eine endseitige Ausgießöffnung an dem Mundstückkörper begrenzt wird, zwischen den Mündungsbacken ein Verschlussgewinde zum Zusammenwirken mit einem Drehkronkorken zum flüssigkeitsdichten Verschließen der Ausgießöffnung ausgebildet wird, das in Form von mehreren teilumfänglich mit einer vorgegebenen Gewindesteigung um den Mundstückkörper umlaufenden und gegenüber dem Mundstückkörper außenseitig überstehenden Gewindeüberständen gebildet wird, an einem Übergang zwischen den zwei Mündungsbacken einerseits und der Führungsscheibe andererseits eine zwischen der Ausgießöffnung und dem Verschlussgewinde angeordnete, umfänglich um den Mundstückkörper umlaufende Diskontinuität ausgebildet wird, wobei ein an die Führungsscheibe angrenzender Endabschnitt der Mündungsbacken derart geformt wird, dass ein außenseitiges Ende der Diskontinuität gegenüber einer Außenfläche des Mundstückkörpers zwischen axial benachbarten Gewindeüberständen nach innen hin versetzt ist, das in die Mündungserzeugungsform zugeführte Mundstückrohmaterial zumindest teilweise verfestigt wird, womit das Mundstück gebildet ist, und die Mündungsbacken getrennt und die Führungsscheibe entnommen wird, um das Mundstück zu entnehmen.

Gemäß noch einem anderen Ausführungsbeispiel der vorliegenden Erfindung ist ein Verfahren zum Herstellen einer Flasche mit Drehkronkorkenverschluss bereitgestellt, bei dem ein Mundstück der Flasche mit einem Verfahren mit den oben genannten Merkmalen hergestellt wird, ein an das Mundstück angeschlossener und damit einstückig ausgebildeter Flaschenkörper ausgebildet wird, und (vorzugsweise nach Füllen der Flasche mit einer Flüssigkeit, insbesondere mit einem Getränk) ein Drehkronkorken an den Mundstückkörper und das Verschlussgewinde unter Ausbilden eines Gegengewindes an dem angeformten Drehkronkorken derart angeformt wird, dass der Drehkronkorken die Ausgießöffnung flüssigkeitsdicht verschließt und einen Abschnitt des Mundstückkörpers so umschließt, dass das Gegengewinde mit dem Verschlussgewinde zusammenwirkt.

Exemplarische Ausführungsbeispiele der Erfindung beruhen auf der überraschenden Erkenntnis, dass die Ursache für die bisher unerklärlichen Absplitterungen beim Öffnen einer Flasche mit Drehkronenmundstück darauf zurückzuführen sind, dass es vorkommen kann, dass ein Benutzer den Drehkronkorken abnimmt, dabei der Drehkronkorken an einer Diskontinuität am Mundstückkörper angreift und dabei anschaulich den Bereich der Diskontinuität (Stufe bzw. Naht) samt einem darüber angeordneten Bereich des Mundstückkörpers abreißt. Dadurch kann es zu Absplitterungen und der Ausbildung von scharfkantigen Bereichen am Mundstückkörper kommen. Gemäß einem exemplarischen Ausführungsbeispiel wird vorgeschlagen, die Position dieser Diskontinuität (die anschaulich als Trennnaht zwischen Mündungsbacken und einer Führungsscheibe entsteht) in einen vor dem Drehkronkorken geschützten Bereich zu verlagern. Unter einem geschützten Bereich wird in diesem Zusammenhang eine Position der Trennnaht verstanden, bei der ein (selbst unsachgemäßes) Abnehmen des Drehkronkorkens von dem Mundstückkörper nicht zu dem unerwünschten Angreifen des Drehkronkorkens an der Trennnaht führen kann. Um in diesem geschützten Bereich zu liegen, wird vorgeschlagen, die Trennnaht nicht mehr über den Kerndurchmesser des Gewindes hervorstehen zu lassen. Erfindungsgemäß ist überraschend herausgefunden worden, dass ein Absplittern dann verunmöglicht ist.

Um die Verlegung der Trennnaht in den geschützten Bereich zu ermöglichen, indem sichergestellt wird, dass die Trennnaht in radialer Flaschenrichtung nicht mehr bis zum Kerndurchmesser des Gewindes hervorsteht, wird das Werkzeug erfindungsgemäß entsprechend geformt.

Es ist aber abweichend von der Erfindung auch möglich, ein Mundstück mit einem herkömmlichen Werkzeug gemäß der oben genannten Spezifikation von CE.T.I.E. zu fertigen, und mittels (zum Beispiel spanenden) Abtragens oder mittels Umformens die Trennnaht aus dem ungeschützten Bereich zu entfernen.

Im Weiteren werden zusätzliche exemplarische Ausführungsbeispiele des Mundstücks, der Flasche, des Werkzeugs zum Herstellen eines Mundstücks, des Verfahrens zum Herstellen eines Mundstücks und des Verfahrens zum Herstellen einer Flasche beschrieben.

Das außenseitige Ende der Diskontinuität soll gegenüber einer Außenfläche des Mundstückkörpers zwischen axial benachbarten Gewindeüberständen um mehr als technisch bedingte Toleranzen des Herstellungswerkzeug und des Herstellungsprozesses und somit des hergestellten Mundstücks nach innen hin versetzt sein. Herstellungswerkzeug bzw. Herstellungsprozesses werden daher so konfiguriert, dass alle Mundstücke, die Abweichungen innerhalb des Toleranzbereichs haben, die nach innen versetzte Außenkante der Diskontinuität aufweisen. Dadurch kann sichergestellt werden, dass alle Gut-Mundstücke einer Herstellungscharge den Absplitterungsschutz bieten. Werte technisch bedingter Toleranzen ergeben sich aus der Spezifikation CE.T.I.E., Dokumentationsblatt GME 14.02, Ausgabe 07/03.

Gemäß einem Ausführungsbeispiel kann die Diskontinuität eine Stufe oder ein Grat sein. Die Diskontinuität kann sich ringförmig geschlossen um das Mundstück herum erstrecken. Die Stufe kann als Kreisring mit horizontaler Ringfläche ausgebildet sein, wenn die Flasche bestimmungsgemäß auf einer horizontalen Unterlage abgestellt ist. Die Diskontinuität ist eine Konsequenz einer Fügestelle zwischen Führungsscheibe und Mündungsbacken (auch als Kopfstücke bezeichnet).

Gemäß der Erfindung ist das außenseitige Ende der Diskontinuität soweit nach innen hin versetzt, dass bei Abnehmen, insbesondere bei Abschrauben oder bei Abheben mittels eines Flaschenöffners, eines an den Mundstückkörper angeformten Drehkronkorkens ein Abreißen von zumindest einem Teil der Diskontinuität und optional eines oberhalb der Diskontinuität angeordneten Abschnitts des Mundstückkörpers durch Angreifen des Drehkronkorkens an der Diskontinuität verunmöglicht ist. Anschaulich ist die Diskontinuität gegenüber einer Fluchtline des Kerndurchmessers des Verschlussgewindes in Richtung einer Zentralachse der Flasche versetzt.

Gemäß einem Ausführungsbeispiel kann eine ringförmige Außenfläche des Mundstückkörpers zwischen dem Verschlussgewinde (insbesondere einem oberen Ende des Verschlussgewindes) und der Diskontinuität (insbesondere einem äußeren Ende des Verschlussgewindes) gegenüber einer ringförmigen (insbesondere einer Kreiszylinderfläche) Außenfläche des Mundstückkörpers zwischen axial benachbarten Gewindeüberständen nach innen (d.h. in Richtung einer Zentralachse der Flasche) verkippt oder nach innen verkrümmt sein. Eine solche Verkippung kann mit konstanter Steigung erfolgen. Eine solche Verkrümmung kann dergestalt sein, dass die zweite Ableitung einer Trajektorie in dem genannten Oberflächenbereich des Mundstücks von Null verschieden ist. In beiden Alternativen kann anschaulich die Diskontinuität in den geschützten Bereichs hineingezogen werden und die Flasche somit vor einem unerwünschten Absplittern beim Öffnen geschützt werden.

Gemäß einem Ausführungsbeispiel kann eine ringförmige Außenfläche des Mundstückkörpers, die sich ausgehend von der Diskontinuität in Richtung des Verschlussgewindes erstreckt, konvex ausgebildet sein. Durch die konvexe Ausgestaltung wird die Gefahr, dass beim Abnehmen eines Drehkronkorkens Letzterer an die Diskontinuität angreifen kann, weiter verringert, da dies eine unnatürliche Seitwärtsbewegung erfordern würde.

Gemäß einem Ausführungsbeispiel kann die konvexe ringförmige Außenfläche des Mundstückkörpers, die sich ausgehend von der Diskontinuität in Richtung des Verschlussgewindes erstreckt, einen ersten Krümmungsradius haben. Eine andere konvexe ringförmige Außenfläche des Mundstückkörpers, die sich ausgehend von der Diskontinuität (insbesondere einem inneren Ende der Diskontinuität) in Richtung der Ausgießöffnung (d.h. hin zum oberen Ende der Flasche) erstreckt, kann einen zweiten Krümmungsradius haben. Zwischen zwei konvexen Abschnitten, welche die Diskontinuität verbindet, ist ein unerwünschtes Angreifen des Drehkronkorkens zum Verursachen von Absplitterungen oder dergleichen noch unwahrscheinlicher gemacht.

Gemäß einem Ausführungsbeispiel kann der erste Krümmungsradius größer als der zweite Krümmungsradius sein. Die stärkere Krümmung kann somit oberhalb der Diskontinuität vorliegen.

Gemäß einem Ausführungsbeispiel kann die Diskontinuität eine radiale Ausdehnung (bezogen auf eine radiale Flaschenerstreckung) in einem Bereich zwischen ungefähr 0,05 mm und ungefähr 0,25 mm, insbesondere in einem Bereich zwischen ungefähr 0,1 mm und ungefähr 0,2 mm, haben. Hat die Diskontinuität Stufenform, so ist die radiale Ausdehnung die Länge des horizontalen Stufenabschnitts. Hat die Diskontinuität Gratform, so ist die radiale Ausdehnung die Länge des horizontal hervorstehenden Grats. Selbstverständlich sind andere Dimensionen der radialen Ausdehnung der Diskontinuität möglich, abhängig von gewählten Werkzeugen oder hergestellten Flaschen.

Gemäß einem Ausführungsbeispiel kann der Versatz zwischen dem außenseitigen Ende der Diskontinuität und der Außenfläche des Mundstückkörpers zwischen axial benachbarten Gewindeüberständen in einem Bereich zwischen ungefähr 0,1 mm und ungefähr 0,4 mm, insbesondere in einem Bereich zwischen ungefähr 0,2 mm und ungefähr 0,3 mm, sein. Ein solcher Versatz hat sich als ausreichend herausgestellt, um eine unerwünschte mechanische Einwirkung eines Drehkronkorkens auf die Diskontinuität zuverlässig zu unterbinden.

Gemäß einem Ausführungsbeispiel kann die Diskontinuität von der Ausgießöffnung (oder von einer Oberkante der Flasche bzw. des Mundstücks) einen axialen (bezogen auf eine Flaschenachse) Abstand in einem Bereich zwischen ungefähr 0,6 mm und ungefähr 1,0 mm, insbesondere in einem Bereich zwischen ungefähr 0,7 mm und ungefähr 0,9 mm, haben. Anschaulich kann gegenüber der oben angesprochenen Spezifikation die Position der Diskontinuität entlang der Zentralachse der Flasche nach oben hin verschoben werden, wodurch auch der oberhalb der Diskontinuität liegende Bereich der Flasche verkleinert und somit die Menge potential absplitternden Glasmaterials der Flasche weiter reduziert wird.

Gemäß einem Ausführungsbeispiel kann, ggf. mit Ausnahme des axialen Abschnitts zwischen dem Verschlussgewinde (insbesondere des oberen Endes des Verschlussgewindes) und der Ausgießöffnung (d.h. einer Oberkante der Flasche bzw. des Mundstücks), das gesamte Mundstück als Drehkronenmundstück 26 H 126 gemäß der Spezifikation CE.T.I.E. GME 14.02 in der Edition 07/03 gefertigt sein. Anschaulich kann die genannte Spezifikation auch weiterhin zur Anwendung kommen mit der Maßgabe, dass die Diskontinuität in der beschriebenen Weise gegenüber dem Kerndurchmesser des Gewindes in Richtung zu der Flaschenachse hin versetzt wird.

Gemäß einem Ausführungsbeispiel kann die Flasche einen Drehkronkorken aufweisen, der die Ausgießöffnung flüssigkeitsdicht verschließend und einen Abschnitt des Mundstückkörpers umschließend als Gegengewinde mit dem Verschlussgewinde zusammenwirkt. Gemäß einem Ausführungsbeispiel kann der Drehkronkorken eine Blechkappe mit einer innenseitigen Dichtschicht (zum Beispiel aus Kunststoff) aufweisen, welche Dichtschicht die Ausgießöffnung flüssigkeitsdicht verschließt, und welche Blechkappe an einer das Verschlussgewinde berührenden bzw. in Eingriff nehmenden Innenseite das Gegengewinde aufweist. Ein solcher Drehkronenkorken kann aus Blech hergestellt sein und kann direkt über dem Verschlussgewinde, das einstückig und einstoffig mit der Flasche aus Glas gebildet ist, angeformt bzw. aufgepresst werden, womit an einer Innenseite des Drehkronkorkens sein Gegengewinde selbsttätig ausgebildet wird.

Gemäß einem Ausführungsbeispiel kann der Flaschenkörper mit einer Flüssigkeit, insbesondere mit einem Getränk, gefüllt sein. Allerdings können in der Flasche auch andere Flüssigkeiten, zum Beispiel Schüttgut, Lösungsmittel oder Chemikalien, untergebracht sein.

Gemäß einem Ausführungsbeispiel können die Mündungsbacken und die Führungsscheibe derart ausgebildet und aufeinander angepasst sein, dass mit diesen ein Mundstück mit den oben beschriebenen Merkmalen ausbildbar ist. Wenn die Mündungsbacken und die Führungsscheibe aneinander montiert sind, wird von diesem ein Hohlraum begrenzt, der die Geometrie des herzustellenden Mundstücks zumindest außen- und oberseitig definiert. Dies gilt jedenfalls dann, wenn die hergestellte Flasche nicht, zum Beispiel spanend, nachbearbeitet wird. Mit einer entsprechenden Formgebung entsprechender Oberflächenbereiche der Mündungsbacken und der Führungsscheibe kann somit die oben beschriebene Anordnung und Dimensionierung der Diskontinuität gewährleistet werden, um diese in den geschützten Bereich zu positionieren.

Zum Herstellen einer erfindungsgemäßen Glasflasche wird ein flüssiger Glastropfen in die Mündungserzeugungsform der zusammengesetzten drei Werkzeuge eingefüllt, zum Beispiel bei 1200°C. Danach ist die Herstellung des Mundstücks beendet, welches dann noch auf eine niedrige Temperatur abgekühlt wird. Bei dieser Niedrigtemperatur ist das Glasmaterial immer noch nicht ganz fest, der Vorformling aber zur nachfolgenden Erzeugung (zum Beispiel mittels Glasblasens) eines Flaschenkörpers handhabbar.

Gemäß einem Ausführungsbeispiel können die Mündungsbacken an einer Kontaktstelle zu der Führungsscheibe einen ringförmigen konkaven Abschnitt der Mündungserzeugungsform begrenzen. Ein konkaver Abschnitt der Mündungserzeugungsform im Endbereich der Mündungsbacken korrespondiert mit einem konvexen Abschnitt des Mundstücks zwischen Diskontinuität und dem Beginn des Verschlussgewindes.

Gemäß einem Ausführungsbeispiel kann die Führungsscheibe eine derart ausgebildete Führungsnut (die Teil der Mündungserzeugungsform bildet) aufweisen, dass eine erste Krümmung (zum Beispiel entsprechend einem ersten Krümmungsradius) des Mundstücks in einem führungsscheibenseitigen Grenzbereich zu der Diskontinuität größer ist als eine zweite Krümmung (zum Beispiel entsprechend einem zweiten Krümmungsradius) des Mundstücks in einem mündungsbackenseitigen Grenzbereich zu der Diskontinuität. Der erste Krümmungsradius ist dann größer als der zweite Krümmungsradius.

Im Folgenden werden exemplarische Ausführungsbeispiele der vorliegenden Erfindung mit Verweis auf die folgenden Figuren detailliert beschrieben.
Fig. 1 zeigt ein Detail eines Mundstücks für eine Flasche mit Drehkronkorkenverschluss gemäß einem exemplarischen Ausführungsbeispiel der Erfindung.
Fig. 2 ist eine Darstellung eines herkömmlichen Mundstücks einer Flasche mit einem Drehkronkorken.
Fig. 3 zeigt einen Querschnitt eines erfindungsgemäßen dreikomponentigen Werkzeugs zum Herstellen eines Mundstücks gemäß einem exemplarischen Ausführungsbeispiel der Erfindung.
Fig. 4 ist eine schematische Darstellung, die eine erfindungsgemäße, in einen geschützten Bereich verlagerte Diskontinuität im Vergleich zu einer herkömmlichen Positionierung der Diskontinuität zeigt.
Fig. 5 ist eine Darstellung, anhand welcher eine Kontur eines herkömmlichen Mundstücks zu erkennen ist.
Fig. 6 ist eine Darstellung, anhand welcher eine Kontur eines Mundstücks gemäß einem exemplarischen Ausführungsbeispiel der Erfindung zu erkennen ist.
Fig. 7 stellt einen Kopfbereich einer Flasche gemäß einem exemplarischen Ausführungsbeispiel der Erfindung dar.
Fig. 8 zeigt die Geometrie eines Verschlussgewindes, das umfänglich um einen Mundstückkörper der Flasche gemäß Fig. 7 gebildet ist.
Fig. 9 zeigt einen Querschnitt durch eine Flasche gemäß einem exemplarischen Ausführungsbeispiel der Erfindung, bei der ein Mundstück mit einer innerhalb eines Kerndurchmessers eines Verschlussgewindes angeordneten Diskontinuität vor einem unerwünschten Abreißen durch einen Kronkorken geschützt ist.
Fig. 10 zeigt ein Werkzeug aus zwei Mündungsbacken und einer Führungsscheibe gemäß einem exemplarischen Ausführungsbeispiel der Erfindung in einem teilweise zusammengesetzten Zustand.
Fig. 11 ist eine Darstellung eines Mundstücks gemäß einem exemplarischen Ausführungsbeispiel der Erfindung.
Fig. 12 zeigt einen Teil einer Mündungserzeugungsform, die von zwei Mündungsbacken begrenzt wird.
Fig. 13 zeigt einen Teil einer Mündungserzeugungsform, die von einer Mündungsbacke in Kombination mit einer Führungsscheibe gebildet bzw. begrenzt wird.

Gleiche oder ähnliche Komponenten in unterschiedlichen Figuren sind mit gleichen Bezugsziffern versehen.

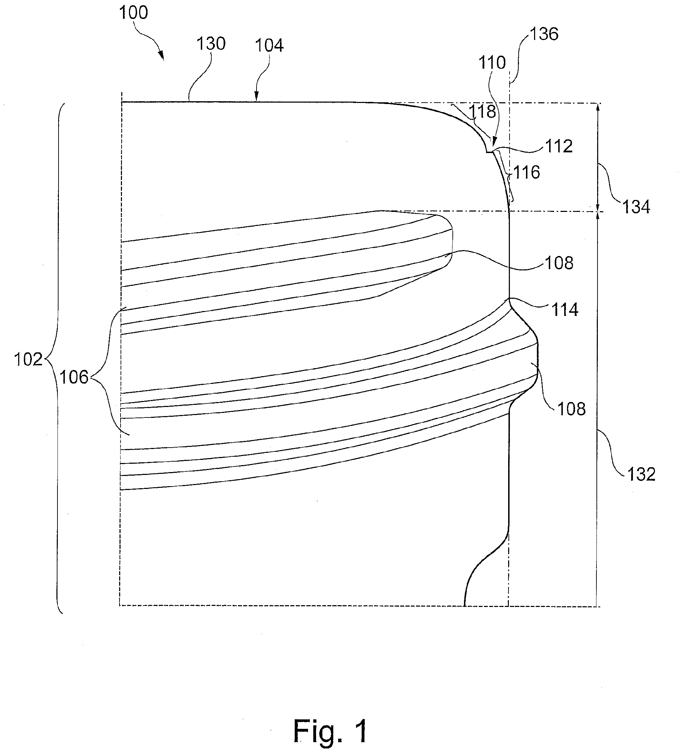

**Fig. 1** zeigt ein Mundstück 100 einer Glasflasche mit Drehkronenverschluss gemäß einem exemplarischen Ausführungsbeispiel der Erfindung. In Fig. 1 ist der Rest der Flasche nicht gezeigt, ebenso wenig wie der Drehkronkorken.

Das Mundstück 100 enthält einen Mundstückkörper 102, der einen oberen Bereich der Flasche bildet. An einer Oberseite 130 des Mundstücks 100 und somit der Flasche ist zentral eine in Fig. 1 nur angedeutete Ausgießöffnung 104 gebildet. Durch die Ausgießöffnung 104 kann eine in die Flasche eingefüllte Flüssigkeit ausgegossen werden, nachdem der Drehkronkorken von der Flasche abgenommen worden ist.

Ein Verschlussgewinde 106 ist aus Glas einstückig mit dem Mundstückkörper 102 ausgebildet und dient zum Ausbilden einer Schraubverbindung gemeinsam mit einem Drehkronkorken. Wenn der Drehkronkorken auf dem Mundstück 100 aufgebracht ist, ist eine flüssigkeitsdichte und ggf. auch gasdichte Verbindung an der Ausgießöffnung 104 gebildet. Die Dichtkraft wird mittels einer Dichtschicht an einer Innenseite des Drehkronkorkens durch einen Formschluss des Verschlussgewindes 106 mit einem korrespondierenden Gegengewinde des Drehkronkorkens bewerkstelligt.

Wie Fig. 1 zeigt, ist das Verschlussgewinde 106 in Form von mehreren umfänglich mit einer vorgebbaren Gewindesteigung um den Mundstückkörper 102 umlaufenden und gegenüber dem Mundstückkörper 102 außenseitig überstehenden Gewindeüberständen 108 gebildet. Die Gewindeüberstände 108 sind gegenüber einem Kerndurchmesser des Verschlussgewindes 106, welcher Kerndurchmesser in Fig. 1 mit einer gestrichelten senkrechten Linie 136 angedeutet ist, nach außen überstehend ausgebildet. Anders ausgedrückt weist der Mundstückkörper 102 im Bereich des Verschlussgewindes 106 die Gewindeüberstände 108 auf, die gegenüber einer in diesem Bereich kreiszylindrischen Außenfläche (Kerndurchmesser) des Mundstückkörpers 102 erhaben hervorstehen.

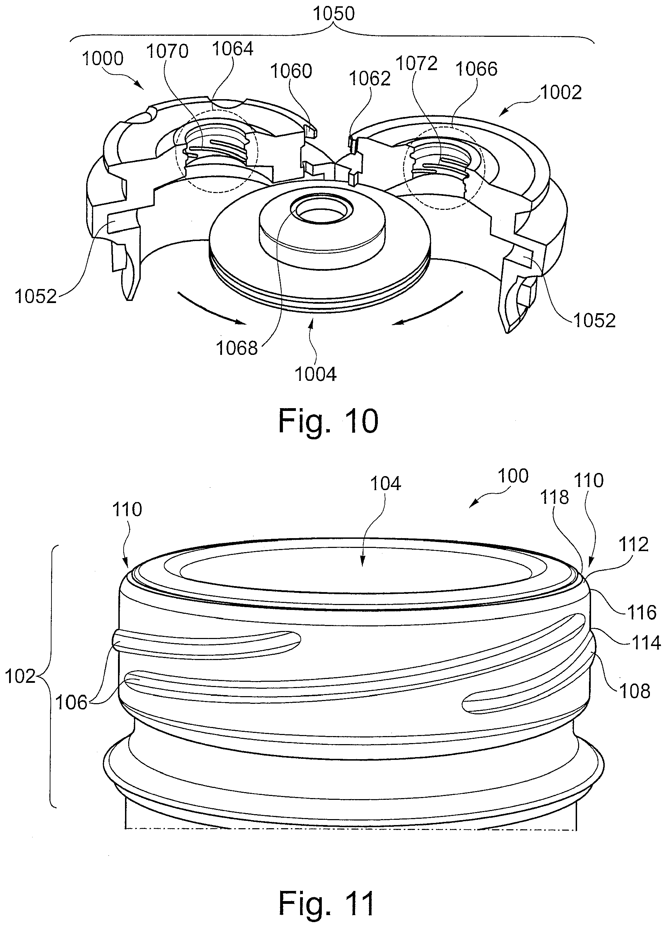

Zwischen der Ausgießöffnung 104 und dem Verschlussgewinde 106 ist eine geschlossen um den Mundstückkörper 102 umlaufende stufenartige Trennnaht als Diskontinuität 110 gebildet. Diese Diskontinuität 110 ist herstellungs- bzw. werkzeugsbedingt und entsteht beim Herstellen des Mundstücks 100 an einem Übergang zwischen zwei Mündungsbacken einerseits und einer Führungsscheibe andererseits. Dies wird unten bezugnehmend auf Fig. 10, Fig. 12 und Fig. 13 beschrieben. Anschaulich ist es zum Herstellen einer Flasche bzw. des Mundstücks 100 erforderlich, die drei genannten Werkzeugteile (zwei Mündungsbacken und eine Führungsscheibe) zusammenzusetzen und nach Abschluss des Gießens des Mundstücks 100 von dem gegossenen Mundstück abzunehmen. Dadurch kommt es an einem Übergang zwischen den Mündungsbacken einerseits und der Führungsscheibe andererseits zur Erzeugung der Diskontinuität 110.

Erfindungsgemäß ist ein außenseitiges Ende 112 der Diskontinuität 110 gegenüber dem Gewindekerndurchmesser bzw. einer Außenfläche 114 des Mundstückkörpers 102 zwischen zwei axial benachbarten Gewindeüberständen 108 nach innen hin, d.h. in Richtung der Zentralachse der Flasche bzw. des Mundstücks 100, versetzt. Anders ausgedrückt befindet sich das gemäß Fig. 1 rechts- und somit außenseitige Ende 112 der Diskontinuität 110 weiter innen als die gestrichelte Fluchtlinie, die dem Kerndurchmesser des Verschlussgewindes 106 entspricht. Durch diese Maßnahme ist die Diskontinuität 110 in einen vor dem Drehkronkorken geschützten Bereich verlagert. Dadurch ist es im Unterschied zu Mundstücken, die beispielhaft in der Spezifikation CE.T.I.E., Drehkronenmundstück 26 H 126, Dokumentationsblatt GME 14.02, Ausgabe 07/03 gezeigt sind, vermieden, dass beim Abnehmen eines Drehkronkorkens durch einen Benutzer der Drehkronkorken an der Diskontinuität 110 angreift und so eine Absplitterung am Mundstückkörper auslösen kann. Im Unterschied zu solchen herkömmlichen Ansätzen ist erfindungsgemäß die Position der Diskontinuität 110 soweit nach innen verlagert, dass es beim Betätigen des Drehkronkorkens nicht mehr zu einer solchen Abrissbewegung von Glasmaterial an der Oberseite des Mundstückkörpers 102 kommt. Dadurch ist das erfindungsgemäße Mundstück 100 wesentlich betriebssicherer als herkömmliche Mundstücke von Glasflaschen mit Drehkronkorkenverschluss.

Fig. 1 zeigt ferner, dass eine ringförmige Außenfläche 116 des Mundstückkörpers 102 zwischen einem oberen Ende des Verschlussgewindes 106 und dem außenseitigen Ende 112 der Diskontinuität 110 gegenüber einer ringförmigen Außenfläche 114 des Mundstückkörpers 102 zwischen axial benachbarten Gewindeüberständen 108 zu einer Zentralachse der Flasche hin konvex gekrümmt ist. Eine ringförmige Außenfläche 118 des Mundstückkörpers 102 zwischen der Oberseite 130 der Flasche und dem innenseitigen Ende der Diskontinuität 110 ist ebenfalls konvex gekrümmt ist. Somit ist beidseitig der Diskontinuität 110 eine - insgesamt doppelte - konvexe Krümmung der Mundstückaußenfläche gebildet, und zwar durch einen ersten Krümmungsradius im Bereich der konvex ringförmigen Außenfläche 116 und durch einen zweiten Krümmungsradius im Bereich der konvexen ringförmigen Außenfläche 118. Wie Fig. 1 entnommen werden kann, ist der erste Krümmungsradius größer als der zweite Krümmungsradius, so dass im Bereich der Oberseite 130 der Flasche die Krümmung stärker ist als zwischen Diskontinuität 110 und den oberseitigem Beginn des Verschlussgewindes 106. Durch diese Krümmung kann selbst in einem Zustand, in dem die Diskontinuität 110 als nach außen hin hervorragender Grat gebildet wird, ein Angreifen des Drehkronkorkens unterbunden werden. Die konvexe Geometrie sorgt für einen sanften Übergang zwischen senkrechten Passagen entlang einer vertikalen Fluchtlinie 136und dem waagerechten Abschnitt im Bereich des oberen Flaschenendes 130.

Ein unterer Abschnitt 132 des Mundstücks 100 kann gemäß der Spezifikation gemäß CE.T.I.E., Dokumentationsblatt GME 14.02, Ausgabe 07/03 gefertigt werden, wobei die Fertigung des sich daran anschließenden oberseitigen Abschnitts 134 von dem in der Spezifikation gezeigten Beispiel insbesondere dahingehend abweicht, dass die Diskontinuität 110 gegenüber der vertikalen Fluchtlinie 136 nach innen hineingebogen und versetzt ist.

Anschaulich ist der Übergang zwischen dem Verschlussgewinde 106 und der als Trennnaht ausgebildeten Diskontinuität 110 keine senkrechte gerade Linie, sondern eine nach innen gekrümmte Trajektorie. Der Krümmungsradius im Bereich der Außenfläche 118 ist durch die Geometrie der Führungsscheibe bedingt, wohingegen der Krümmungsradius im Bereich der Außenfläche 116 durch die Geometrie der Mündungsbacken bzw. der Kopfform bedingt ist.

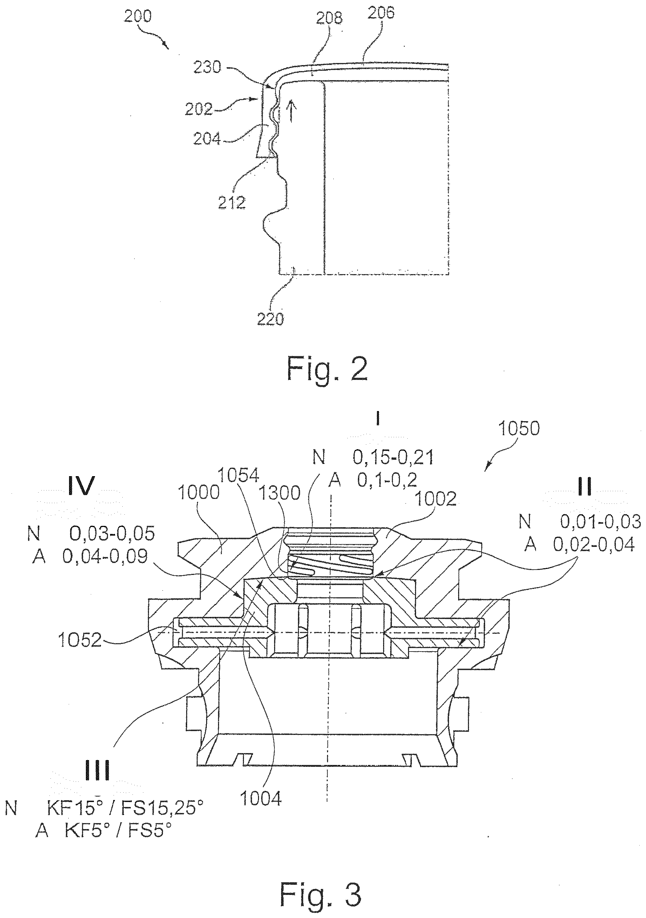

**Fig. 2** zeigt einen Querschnitt 200 einer herkömmlichen Flasche, bei der ein Drehkronkorken 202 auf ein herkömmliches Mundstück 220 aufgesetzt ist. Fig. 2 zeigt, dass der Drehkronkorken 202, der auch erfindungsgemäß verwendet werden kann, eine Blechkappe 206 und eine darunter angeordnete Dichtung 208 aufweist, die eine Oberseite des Mundstücks 220 flüssigkeitsdicht bedeckt. Ein solcher Drehkronkorken 202 kann an ein fertig hergestelltes Mundstück 220 angeformt werden, so dass sich durch einen entsprechenden Pressdruck ein Gegengewinde 204 des Drehkronkorken 202 ausbildet, das mit einem Verbindungsgewinde 212 des Mundstücks 220 zusammenspielt.

Fig. 2 veranschaulicht einen von dem vorliegenden Erfinder als Ursache für die Beschädigung bzw. Absplitterung beim Abnehmen des Drehkronkorkens 202 gemäß herkömmlichen Mundstücken 220 erkannten Umstand. Wie an einem Bereich 230 erkannt werden kann, kann ein schnabelförmiger Grat bei der Öffnung der Flasche mittels Anhebens des Drehkronkorken 202 in Richtung eines Pfeils beschädigt werden, indem anschaulich der nach oben geführte Drehkronkorken 202 an dem Grat angreifen kann und diesen gemeinsam mit weiteren Glasmaterial des Mundstücks 220 nach oben abreißen kann.

Basierend auf dieser Erkenntnis wird erfindungsgemäß vorgeschlagen, die Position des Grats (bzw. einer anders, zum Beispiel stufenförmig, geformten Diskontinuität) soweit nach innen zu verlegen, dass es beim Hochziehen des Drehkronkorkens 202 zu dieser unerwünschten Wegreißbewegung nicht mehr kommen kann.

**Fig. 3** zeigt ein Werkzeug 1050 gemäß einem exemplarischen Ausführungsbeispiel der Erfindung in einem zusammengesetzten Zustand. Das dreiteilige Werkzeug 1050 enthält eine erste Mündungsbacke 1000, eine zweite Mündungsbacke 1002 und eine Führungsscheibe 1004. Die Führungsscheibe 1004 ist in einer Führungsscheibenaufnahme 1052 formschlüssig aufgenommen, die in einem zusammengesetzten Zustand der beiden Mündungsbacken 1000, 1002 zwischen diesen gebildet ist. Wenn die Führungsscheibe 1004 und die beiden Mündungsbacken 1000, 1002 zusammengesetzt sind, wird eine Mündungserzeugungsform 1300 von den drei Werkzeugteilen 1000, 1002, 1004 begrenzt. Wird nun erhitztes, fließfähiges Glas in die Mündungserzeugungsform 1300 eingeführt, so kann dadurch ein Mundstück 100 erzeugt werden. Gemäß diesem Herstellungsverfahren ist die Form des erzeugten Mundstücks 100, wie es zum Beispiel in Fig. 1 gezeigt ist, negativ oder invers zu der Gestalt der Mündungserzeugungsform 1300. Wie unten näher beschrieben wird, ist insbesondere ein Übergang 1054 zwischen den Mündungsbacken 1000, 1002 einerseits und der Führungsscheibe 1004 andererseits Ursache für das Entstehen einer Diskontinuität 110 am Mundstück 100. Durch entsprechende Formung insbesondere eines Kontaktbereichs zwischen Mündungsbacken 1000, 1002 und Führungsscheibe 1004 kann diese Diskontinuität 110 allerdings zwangsweise an einer solchen Position erzeugt werden, dass dadurch die Gefahr einer Absplitterung beim Öffnen eines Drehkronkorkenverschlusses unterbunden ist. Dies führt zu einer Form des Mundstücks 100 gemäß Fig. 1 und kann durch eine in Fig. 10, Fig. 12 und Fig. 13 gezeigte Ausgestaltung der drei Werkzeugteile 1000, 1002, 1004 erreicht werden.

**Fig. 3** zeigt ferner, dass Toleranzen an diversen Stellen des Werkzeugs 1050 verändert werden können, um die Gefahr des Absplitterns zuverlässig auszuschließen. Dabei beziehen sich die als "A" (Alt) bezeichneten Toleranzen auf eine herkömmliche Mundstückherstellung gemäß der Spezifikation CE.T.I.E., Dokumentationsblatt GME 14.02, Ausgabe 07/03, wohingegen die als "N" (Neu) bezeichneten Toleranzen sich auf ein gemäß einem Ausführungsbeispiel der Erfindung verändertes Werkzeug zum Herstellen des Mundstücks beziehen. Auch durch die erfindungsgemäße Anpassung der Toleranzen des Werkzeugs 1050 gemäß Fig. 3 kann somit vermieden werden, dass es zu unerwünschten Absplitterungen im oberen Flaschenbereich kommt. Mit den Bezugszeichen I und IV wird ein Durchmesserspiel, mit II ein Höhenspiel und mit III ein Teilungswinkel beschrieben.

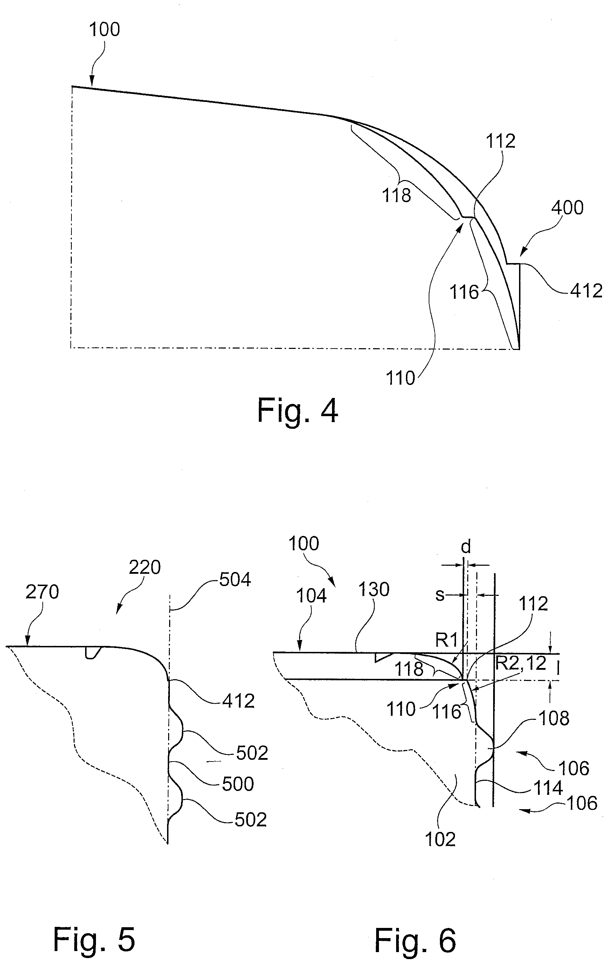

**Fig. 4** vergleicht anschaulich eine Form des Mundstücks 100 gemäß einem exemplarischen Ausführungsbeispiel der Erfindung mit einer herkömmlichen Formtrennung 400, wie sie bei Befolgung der oben angegebenen Spezifikation gemäß CE.T.I.E. erhalten wird. Die Diskontinuität 412 liegt herkömmlich mit ihrem rechtsseitigen Ende genau in Flucht mit dem Kerndurchmesser des Mundstückgewindes und ist daher anfällig, bei Abziehen eines Drehkronkorkens nach oben mit abgerissen zu werden. Dagegen zeigt Fig. 4 auch, dass durch die erfindungsgemäße Verlegung der Formtrennung oder Diskontinuität 110 in einen geschützten Bereich, siehe das Außenende 112 der Diskontinuität 110, ein solcher mechanischer Angriff mechanisch höchst unwahrscheinlich, wenn nicht unmöglich gemacht worden ist.

**Fig. 5** zeigt nochmals, wie ein herkömmliches Mundstück 220 im Bereich seiner Oberseite 270 gemäß der oben beschriebenen Spezifikation CE.T.I.E. gefertigt wird. Die Diskontinuität 412 befindet sich dabei in einer Fluchtlinie 504 mit dem Kerndurchmesser 500 zwischen Gewindeüberständen 502.

Im Gegensatz dazu zeigt **Fig. 6** eine erfindungsgemäße Form und Position der Diskontinuität 110, bei der die beiden konvexen Abschnitte 116, 118 die dazwischen angeordnete Diskontinuität 110 schützend einschließen. Insbesondere zeigt Fig. 6, dass in diesem Ausführungsbeispiel eine radiale Ausdehnung "d", d.h. deren horizontale Stufenlänge, der Diskontinuität 110 ca. 0,15 mm beträgt. Ein Versatz "s" zwischen dem außenseitigen Ende 112 der Diskontinuität 110 und der Außenfläche 114 am Kerndurchmesser des Mundstückkörpers 102 zwischen axial benachbarten Gewindeüberständen 108 liegt bei dem gezeigten Ausführungsbeispiel bei ca. 0,25 mm. Ferner hat die Diskontinuität 110 von der Ausgießöffnung 104 bzw. dem oberen Flaschenende 130 bei diesem Ausführungsbeispiel einen axialen Abstand "I" von 0,8 mm.

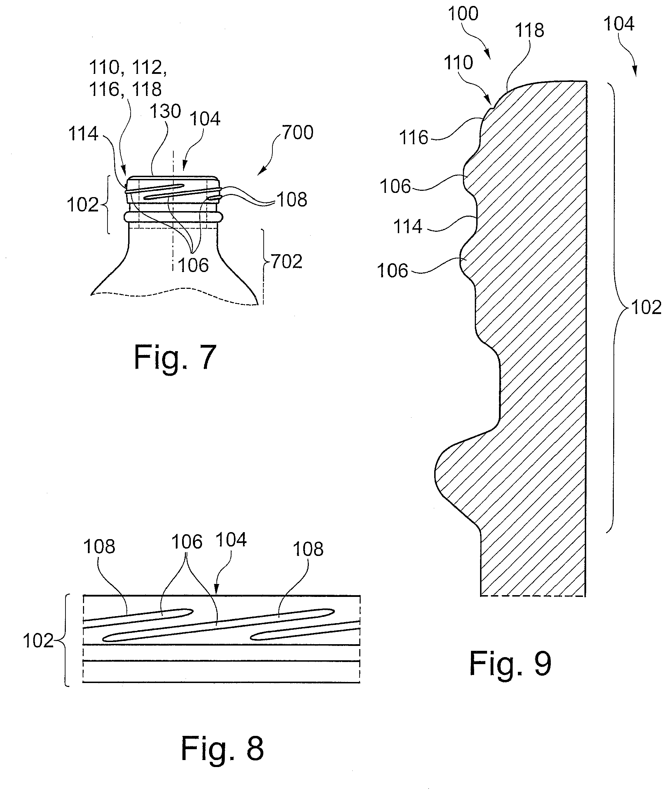

**Fig. 7** zeigt eine Glasflasche 700 gemäß einem exemplarischen Ausführungsbeispiel der Erfindung. Diese weist ein Mundstück 100 sowie einen daran einstückig angeschlossenen Flaschenkörper 702 auf und besteht aus Glas. Auf das Mundstück der Flasche 700 kann zum Verschließen ein Drehkronkorken 202 aufgebracht werden, wie er in Fig. 2 gezeigt ist.

**Fig. 8** zeigt, dass das Gewinde 106 des Mundstücks 100 der Flasche 700 durch drei Gewindeüberstände 108 geformt ist, die sich jeweils entlang eines Teilbereichs des Flaschenumfangs erstrecken.

**Fig. 9** stellt einen Querschnitt des Mundstücks 100 gemäß einem exemplarischen Ausführungsbeispiel der Erfindung dar und zeigt, wie die Diskontinuität 110 in den geschützten Bereich rückverlagert wird.

**Fig. 10** zeigt ein Werkzeug 1050 zum Herstellen eines Mundstücks 100, wie es in **Fig. 11** gezeigt ist und die oben beschriebenen erfindungsgemäßen Merkmale aufweist.

Wie in Fig. 10 gezeigt ist, enthält das Werkzeug 1050 die erste Mündungsbacke 1000 und die zweite Mündungsbacke 1002. Diese bilden anschaulich zwei Halbschalen zum gemeinsamen Bilden eines oberseitigen Hauptbereichs der Mündungserzeugungsform 1300 und zwei Halbschalen zum Aufnehmen der Führungsscheibe 1004. Diese ist nämlich in einer Führungsscheibenaufnahme 1052 formschlüssig aufnehmbar, die gebildet wird, wenn die beiden Mündungsbacken 1002, 1004 zusammengesetzt werden. Dieses Zusammensetzen kann durch eine Drehbewegung (siehe Pfeile in Fig. 10) der beiden Mündungsbacken 1000, 1002 aufeinander zu bewerkstelligt werden. Dadurch kommt es auch zum gegenseitigen in Eingriff Nehmen von korrespondierenden Verbindungselementen 1060, 1062 der Mündungsbacken 1000, 1002. Die Mündungsbacken 1000, 1002 können auch als Kopfstück bezeichnet werden. Im zusammengesetzten Zustand der Mündungsbacken 1000, 1002 bilden eine erste Mundstückhalbform 1064 und eine zweite Mundstückhalbform 1066 gemeinsam den oberen Bereich der Mündungserzeugungsform 1300. Den unteren Bereich der Mündungserzeugungsform 1300 begrenzt eine Ringnut 1068, die in einem oberen Bereich der Führungsscheibe 1004 gebildet ist und im zusammengesetzten Zustand des Werkzeugs 1000 das untere Ende der Mundstückhalbformen 1064, 1066 berührt. Genau an der Grenze zwischen dem unteren Ende der Mundstückhalbformen 1064, 1066 einerseits und der Ringnut 1068 der Führungsscheibe 1004 andererseits wird die Diskontinuität 110 gebildet.

Wenn die drei Werkzeugkomponenten 1000, 1002, 1004 zusammengesetzt sind und fließfähiges Glasmaterial in die dadurch erzeugte Mündungserzeugungsform 1300 eingeführt wird, kommt es zum Ausbilden eines erfindungsgemäßen Mundstücks 100. Insbesondere wird zwischen den Mündungsbacken 1000, 1002 der Mundstückkörper 102 ausgebildet. Mittels der Führungsscheibe 1004, genauer gesagt, mittels der Ringnut 1068, wird die endseitige Ausgießöffnung 104 in dem Mundstückkörper 102 begrenzt bzw. die Flaschenoberkante 130 erzeugt. Zwischen den Mündungsbacken 1000, 1002 wird das Verschlussgewinde 106 zum Zusammenwirken mit einem Drehkronkorkengewinde ausgebildet. Dieses Verschlussgewinde 106 wird in Form von mehreren Überständen 108 gebildet, die umfänglich mit einer vorgebbaren Gewindesteigung um den Mundstückkörper umlaufen. Dieses Verschlussgewinde 106 wird durch die entsprechende Gewindenuten 1070, 1072 der Mundstückhalbformen 1064, 1066 gebildet.

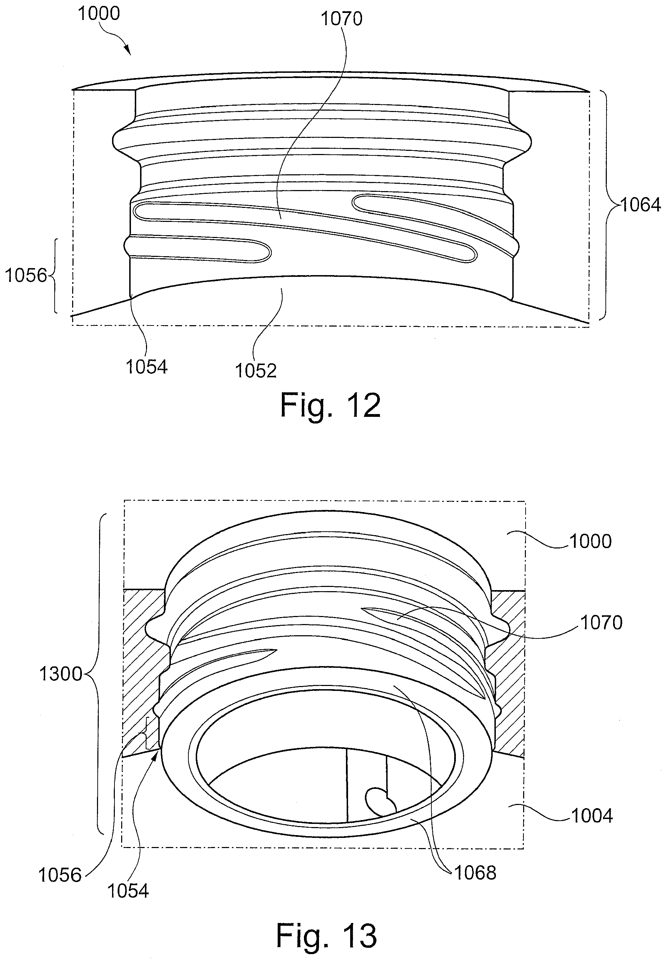

Schließlich wird, siehe **Fig. 12****,** an einem Übergang 1054 zwischen den Mündungsscheiben 1000, 1002 einerseits und der Führungsscheibe 1004 andererseits eine zwischen der Ausgießöffnung 104 und dem Verschlussgewinde 106 angeordnete, umfänglich um den Mundstückkörper 102 umlaufende Diskontinuität 110 ausgebildet. Ein an die Führungsscheibe 1004 angrenzender Endabschnitt 1056 der Mündungsbacken 1000, 1002 ist derart geformt, dass ein außenseitiges Ende 112 der Diskontinuität 110 gegenüber einer Außenfläche 114 des Mundstückkörpers 102 zwischen axial benachbarten Gewindeüberständen 108 nach innen versetzt wird.

Fig. 12 zeigt eine Detailansicht der Mündungsbacke 1000, insbesondere der Mundstückhalbform 1064. Fig. 12 zeigt insbesondere, dass in dem Bereich 1056 ein konkav gekrümmter Abschnitt der Mündungserzeugungsform 1300 das Versetzen der Diskontinuität 110 nach innen hin und in einen konvexen Bereich der Mundstückaußenfläche hin ermöglicht.

**Fig. 13** zeigt eine Detailansicht der Mündungsbacke 1000, die hier mit der Führungsscheibe 1004 zusammengesetzt ist. Eine Kontaktstelle 1054, an der die Diskontinuität 110 geformt wird, ist ebenfalls gezeigt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass im Rahmen der Patentansprüche Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Mundstück (100) für eine Flasche (700) mit Drehkronkorkenverschluss, wobei das Mundstück (100) aufweist:
einen Mundstückkörper (102) mit einer endseitigen Ausgießöffnung (104);
ein Verschlussgewinde (106) zum Zusammenwirken mit einem Drehkronkorken (202) zum flüssigkeitsdichten Verschließen der Ausgießöffnung (104), das in Form von mehreren teilumfänglich mit einer vorgebbaren Gewindesteigung um den Mundstückkörper (102) umlaufenden und gegenüber dem Mundstückkörper (102) außenseitig überstehenden Gewindeüberständen (108) gebildet ist;
wobei das Mundstück (100) ferner aufweist
eine zwischen der Ausgießöffnung (104) und dem Verschlussgewinde (106) angeordnete, umfänglich um den Mundstückkörper (102) umlaufende Diskontinuität (110), die beim Herstellen des Mundstücks (100) werkzeugbedingt an einem Übergang zwischen zwei Mündungsbacken (1000, 1002) einerseits und einer Führungsscheibe (1004) andererseits entsteht, indem die zwei Mündungsbacken (1000, 1002) und die Führungsscheibe (1004) derart ausgebildet sind, dass in dem zusammengesetzten Zustand der zwei Mündungsbacken (1000, 1002) und der Führungsscheibe (1004) ein Übergang (1045) derart ausgebildet ist, dass an dem Übergang (1054) zwischen den zwei Mündungsbacken (1000, 1002) einerseits und der Führungsscheibe (1004) andererseits die umfänglich um den Mundstückkörper (102) umlaufende Diskontinuität (110) mittels Zuführens von fließfähigem Mundstückrohmaterial ausbildbar ist; **dadurch gekennzeichnet, dass**
ein außenseitiges Ende (112) der Diskontinuität (110) eine nach innen versetzte Außenkante der Diskontinuität (110) bildet und entsprechend gegenüber einer Außenfläche (114) zwischen axial benachbarten Gewindeüberständen (108) des Mundstückkörpers (102) nach innen hin in Richtung einer Zentralachse des Mundstücks (100) versetzt ist.

2. Mundstück (100) gemäß Anspruch 1, wobei die Diskontinuität (110) eine Stufe oder ein Grat ist.

3. Mundstück (100) gemäß Anspruch 1 oder 2, wobei eine ringförmige Außenfläche (116) des Mundstückkörpers (102) zwischen dem Verschlussgewinde (106) und der Diskontinuität (110) gegenüber einer ringförmigen Außenfläche (114) des Mundstückkörpers (102) zwischen axial benachbarten Gewindeüberständen (108) nach innen verkippt oder nach innen verkrümmt ist.

4. Mundstück (100) gemäß einem der Ansprüche 1 bis 3, wobei eine ringförmige Außenfläche (116) des Mundstückkörpers (102), die sich ausgehend von der Diskontinuität (110) in Richtung des Verschlussgewindes (106) erstreckt, konvex ausgebildet ist.

5. Mundstück (100) gemäß Anspruch 4, wobei die konvexe ringförmige Außenfläche (116) des Mundstückkörpers (102), die sich ausgehend von der Diskontinuität (110) in Richtung des Verschlussgewindes (106) erstreckt, einen ersten Krümmungsradius (R2.12) hat und wobei eine konvexe ringförmige Außenfläche (118) des Mundstückkörpers (102), die sich ausgehend von der Diskontinuität (110) in Richtung der Ausgießöffnung (104) erstreckt, einen zweiten Krümmungsradius (R1) hat,
wobei insbesondere der erste Krümmungsradius (R2.12) größer als der zweite Krümmungsradius (R1) ist,

6. Mundstück (100) gemäß einem der Ansprüche 1 bis 5, wobei die Diskontinuität (110) eine radiale Ausdehnung (d), insbesondere eine radiale Horizontalausdehnung, in einem Bereich zwischen 0,05 mm und 0,25 mm, insbesondere in einem Bereich zwischen 0,1 mm und 0,2 mm, hat, und/oder wobei ein Versatz (s) zwischen dem außenseitigen Ende (112) der Diskontinuität (110) und der Außenfläche (114) des Mundstückkörpers (102) zwischen axial benachbarten Gewindeüberständen (108) in einem Bereich zwischen 0,1 mm und 0,4 mm, insbesondere in einem Bereich zwischen 0,2 mm und 0,3 mm, liegt, und/oder wobei die Diskontinuität (110) von der Ausgießöffnung (104) einen axialen Abstand (I) in einem Bereich zwischen 0,6 mm und 1,0 mm, insbesondere in einem Bereich zwischen 0,7 mm und 0,9 mm, hat.

7. Mundstück (100) gemäß einem der Ansprüche 1 bis 6, wobei, mit Ausnahme des axialen Abschnitts zwischen dem Verschlussgewinde (106) und der Ausgießöffnung (104), das gesamte Mundstück als Drehkronenmundstück 26 H 126 gemäß der Spezifikation CE.T.I.E. GME 14.02 in der Edition 07/03 gefertigt ist.

8. Flasche (700), insbesondere Glasflasche, aufweisend ein Mundstück (100) gemäß einem der Ansprüche 1 bis 7 und einen daran angeschlossenen und damit einstückig ausgebildeten Flaschenkörper (702).

9. Flasche (700) gemäß Anspruch 8, aufweisend einen Drehkronkorken (202), der die Ausgießöffnung (104) flüssigkeitsdicht verschließend und einen Abschnitt des Mundstückkörpers (102) umschließend als Gegengewinde (204) mit dem Verschlussgewinde (106) zusammenwirkt, wobei der Drehkronkorken (202) insbesondere eine Blechkappe (206) mit einer innenseitigen Dichtschicht (208) aufweist, welche Dichtschicht (208) die Ausgießöffnung (104) flüssigkeitsdicht verschließt, und welche Blechkappe (206) an einer das Verschlussgewinde (106) in Eingriff nehmenden Innenseite das Gegengewinde (204) aufweist, wobei der Flaschenkörper (702) insbesondere mit einer Flüssigkeit, insbesondere mit einem Getränk, gefüllt ist.

10. Werkzeug (1050) zum Herstellen eines Mundstücks (100) für eine Flasche (700) mit Drehkronkorkenverschluss, wobei das Werkzeug (1050) aufweist:
zwei Mündungsbacken (1000, 1002); und
eine Führungsscheibe (1004), die in einer Führungsscheibenaufnahme (1052) formschlüssig aufnehmbar ist, welche Führungsscheibenaufnahme (1052) in einem zusammengesetzten Zustand der Mündungsbacken (1000, 1002) zwischen diesen gebildet ist;
wobei in dem zusammengesetzten und die Führungsscheibe (1004) aufnehmenden Zustand der Mündungsbacken (1000, 1002) von den Mündungsbacken (1000, 1002) und der Führungsscheibe (1004) eine derart geformte Mündungserzeugungsform (1300) begrenzt wird, dass mittels Zuführens von fließfähigem Mundstückrohmaterial, insbesondere flüssigem Glas, in die Mündungserzeugungsform (1300):
zwischen den Mündungsbacken (1000, 1002) ein Mundstückkörper (102) ausbildbar ist;
mittels der Führungsscheibe (1004) eine endseitige Ausgießöffnung (104) an dem Mundstückkörper (102) begrenzt ist;
zwischen den Mündungsbacken (1000, 1002) ein Verschlussgewinde (106) zum Zusammenwirken mit einem Drehkronkorken (202) zum flüssigkeitsdichten Verschließen der Ausgießöffnung (104) mittels entsprechende Gewindenuten (1070, 1072) in Mundstückhalbformen (1064, 1066) der Mündungsbacken (1000, 1002) ausbildbar ist, das in Form von mehreren teilumfänglich mit einer vorgebbaren Gewindesteigung um den Mundstückkörper (102) umlaufenden und gegenüber dem Mundstückkörper (102) außenseitig überstehenden Gewindeüberständen (108) gebildet ist;
wobei die zwei Mündungsbacken (1000, 1002) und die Führungsscheibe (1004) derart ausgebildet sind, dass in dem zusammengesetzten Zustand der zwei Mündungsbacken (1000, 1002) einerseits und der Führungsscheibe (1004) ein Übergang (1045) derart ausgebildet ist, dass an dem Übergang (1054) zwischen den zwei Mündungsbacken (1000, 1002) einerseits und der Führungsscheibe (1004) andererseits eine zwischen der Ausgießöffnung (104) und dem Verschlussgewinde (106) angeordnete, umfänglich um den Mundstückkörper (102) umlaufende Diskontinuität (110) ausbildbar ist,
wobei ein an die Führungsscheibe (1004) angrenzender Endabschnitt (1056) der Mündungsbacken (1000, 1002) derart geformt ist, dass ein außenseitiges Ende (112) der Diskontinuität (110) gegenüber einer Außenfläche (114) zwischen axial benachbarten Gewindeüberständen (108) des Mundstückkörpers (102) nach innen hin versetzt ist.

11. Werkzeug (1050) gemäß Anspruch 10, wobei die Mündungsbacken (1000, 1002) und die Führungsscheibe (1004) derart ausgebildet und aufeinander angepasst sind, dass mit diesen ein Mundstück (100) gemäß einem der Ansprüche 1 bis 7 ausbildbar ist.

12. Werkzeug (1050) gemäß Anspruch 10 oder 11, wobei die Mündungsbacken (1000, 1002) an einer Kontaktstelle (1054) zu der Führungsscheibe (1004) einen ringförmigen konkaven Abschnitt (1056) der Mündungserzeugungsform (1300) begrenzen, wobei die Führungsscheibe (1004) insbesondere eine derart ausgebildete Führungsnut (1068) aufweist, dass eine erste Krümmung (R1) des Mundstücks (100) in einem führungsscheibenseitigen Grenzbereich (118) zu der Diskontinuität (110) größer ist als eine zweite Krümmung (R2.12) des Mundstücks (100) in einem mündungsbackenseitigen Grenzbereich (116) zu der Diskontinuität (100).

13. Verfahren zum Herstellen eines Mundstücks (100) für eine Flasche (700) mit Drehkronkorkenverschluss, wobei das Verfahren aufweist:
formschlüssiges Aufnehmen einer Führungsscheibe (1004) in einer Führungsscheibenaufnahme (1052), die mittels Zusammensetzens von zwei Mündungsbacken (1000, 1002) zwischen diesen gebildet ist, wobei in dem zusammengesetzten und die Führungsscheibe (1004) aufnehmenden Zustand der Mündungsbacken (1000, 1002) von den Mündungsbacken (1000, 1002) und der Führungsscheibe (1004) eine Mündungserzeugungsform (1300) begrenzt wird;
Zuführen von fließfähigem Mundstückrohmaterial in die Mündungserzeugungsform (1300), wodurch:
zwischen den Mündungsbacken (1000, 1002) ein Mundstückkörper (102) ausgebildet wird;
mittels der Führungsscheibe (1004) eine endseitige Ausgießöffnung (104) an dem Mundstückkörper (102) begrenzt wird;
zwischen den Mündungsbacken (1000, 1002) ein Verschlussgewinde (106) zum Zusammenwirken mit einem Drehkronkorken (202) zum flüssigkeitsdichten Verschließen der Ausgießöffnung (104) ausgebildet wird, das in Form von mehreren teilumfänglich mit einer vorgegebenen Gewindesteigung um den Mundstückkörper (102) umlaufenden und gegenüber dem Mundstückkörper (102) außenseitig überstehenden Gewindeüberständen (108) gebildet wird;
an einem Übergang (1054) zwischen den zwei Mündungsbacken (1000, 1002) einerseits und der Führungsscheibe (1004) andererseits eine zwischen der Ausgießöffnung (104) und dem Verschlussgewinde (106) angeordnete, umfänglich um den Mundstückkörper (102) umlaufende Diskontinuität (110) ausgebildet wird, wobei ein an die Führungsscheibe (1004) angrenzender Endabschnitt (1056) der Mündungsbacken (1000, 1002) derart geformt wird, dass ein außenseitiges Ende (112) der Diskontinuität (110) gegenüber einer Außenfläche (114) zwischen axial benachbarten Gewindeüberständen (108) des Mündungskörpers (102) nach innen hin versetzt ist;
zumindest teilweises Verfestigen des in die Mündungserzeugungsform (1300) zugeführten Mundstückrohmaterials, womit das Mundstück (100) gebildet ist; und
Trennen der Mündungsbacken (1000, 1002) und Abnehmen der Führungsscheibe (1004) zum Entnehmen des Mundstücks (100).

14. Verfahren zum Herstellen einer Flasche (700) mit Drehkronkorkenverschluss, wobei das Verfahren aufweist:
Herstellen eines Mundstücks (100) der Flasche (700) gemäß Verfahrensanspruch 13;
Ausbilden eines an das Mundstück (100) angeschlossenen und damit einstückig ausgebildeten Flaschenkörpers (702);
Anformen eines Drehkronkorkens (202) an den Mundstückkörper (102) und das Verschlussgewinde (106) unter Ausbilden eines Gegengewindes an dem angeformten Drehkronkorken (202) derart, dass der Drehkronkorken (202) die Ausgießöffnung (104) flüssigkeitsdicht verschließt und einen Abschnitt des Mundstückkörpers (102) so umschließt, dass das Gegengewinde (204) mit dem Verschlussgewinde (106) zusammenwirkt.

## Claims

1. A mouthpiece (100) for a bottle (700) with a rotary crown cap closure, wherein the mouthpiece (100) comprises:
a mouthpiece body (102) having an end pouring opening (104);
a closure thread (106) for cooperation with a rotary crown cap (202) for liquid-tight closure of the pouring opening (104), which is formed in the form of a plurality of thread projections (108) which run around the mouthpiece body (102) and project externally with respect to the mouthpiece body (102), partially circumferentially with a predeterminable thread pitch;
wherein the mouthpiece (100) further comprises
a discontinuity (110) which is arranged between the pouring opening (104) and the closure thread (106), runs circumferentially around the mouthpiece body (102) and which, during the manufacture of the mouthpiece (100) as a result of the tool, arises at a transition between two muzzle jaws (1000, 1002) on the one hand and a guide disc (1004) on the other hand, in that the two muzzle jaws (1000, 1002) and the guide disc (1004) are designed in such a way, in that, in the assembled state of the two muzzle jaws (1000, 1002) and the guide disc (1004), a transition (1045) is formed in such a way that, at the transition (1054) between the two muzzle jaws (1000, 1002) on the one hand and the guide disc (1004) on the other hand, the discontinuity (110) circumferentially surrounding the mouthpiece body (102) can be formed by feeding flowable mouthpiece raw material; **characterized in that**
an outer end (112) of the discontinuity (110) forms an inwardly offset outer edge of the discontinuity (110) and is correspondingly offset inwardly from an outer surface (114) between axially adjacent thread projections (108) of the mouthpiece body (102) in the direction of a central axis of the mouthpiece (100).

2. The mouthpiece (100) according to claim 1, wherein the discontinuity (110) is a step or a burr.

3. The mouthpiece (100) according to claim 1 or 2, wherein an annular outer surface (116) of the mouthpiece body (102) between the closure thread (106) and the discontinuity (110) is inwardly tilted or inwardly curved relative to an annular outer surface (114) of the mouthpiece body (102) between axially adjacent thread projections (108).

4. The mouthpiece (100) according to one of claims 1 to 3, wherein an annular outer surface (116) of the mouthpiece body (102) extending from the discontinuity (110) in the direction of the closure thread (106) is convex.

5. The mouthpiece (100) according to claim 4, wherein the convex annular outer surface (116) of the mouthpiece body (102) extending from the discontinuity (110) in the direction of the closure thread (106) has a first radius of curvature (R2.12) and wherein a convex annular outer surface (118) of the mouthpiece body (102) extending from the discontinuity (110) in the direction of the pouring opening (104) has a second radius of curvature (R1),
wherein in particular the first radius of curvature (R2.12) being greater than the second radius of curvature (R1).

6. The mouthpiece (100) according to one of claims 1 to 5, wherein the discontinuity (110) has a radial extent (d), in particular a radial horizontal extent, in a range between 0.05 mm and 0.25 mm, in particular in a range between 0.1 mm and 0.2 mm, and/or
wherein an offset (s) between the outer end (112) of the discontinuity (110) and the outer surface (114) of the mouthpiece body (102) lies between axially adjacent thread projections (108) in a range between 0.1 mm and 0.4 mm, in particular in a range between 0.2 mm and 0.3 mm, and/or
wherein the discontinuity (110) from the pouring opening (104) has an axial distance (I) in a range between 0.6 mm and 1.0 mm, in particular in a range between 0.7 mm and 0.9 mm.

7. The mouthpiece (100) according to one of claims 1 to 6, wherein, with the exception of the axial portion between the closure thread (106) and the pouring opening (104), the entire mouthpiece is manufactured as a rotating crown mouthpiece 26 H 126 according to the specification CE.T.I.E. GME 14.02 in the edition 07/03.

8. A bottle (700), in particular glass bottle, comprising a mouthpiece (100) according to one of claims 1 to 7 and a bottle body (702) connected thereto and formed integrally therewith.

9. The bottle (700) according to claim 8, having a rotary crown cap (202) which closes the pouring opening (104) in a liquid-tight manner and encloses a section of the mouthpiece body (102) to cooperate as a counter-thread (204) with the closure thread (106), the rotary crown cap (202) having in particular a sheet-metal cap (206) with an internal sealing layer (208), which sealing layer (208) closes the pouring opening (104) in a liquid-tight manner, and which sheet-metal cap (206) has the counter-thread (204) on an inner side engaging the closure thread (106), the bottle body (702) in particular being filled with a liquid, in particular with a beverage.

10. A tool (1050) for manufacturing a mouthpiece (100) for a bottle (700) with a rotary crown cap closure, the tool (1050) having:
two muzzle jaws (1000, 1002); and
a guide disc (1004) which is positively receivable in a guide disc receptacle (1052), which guide disc receptacle (1052) is formed in a composite state of the muzzle jaws (1000, 1002) between them;
wherein in the assembled state of the muzzle jaws (1000, 1002) receiving the guide disk (1004), a mouthpiece generation mold (1300) shaped in such a way is bounded by the muzzle jaws (1000, 1002) and the guide disk (1004) that by means of feeding flowable mouthpiece raw material, in particular liquid glass, into the mouthpiece generation mold (1300):
a mouthpiece body (102) can be formed between the muzzle jaws (1000, 1002);
by means of the guide disc (1004), an end pouring opening (104) is bounded on the mouthpiece body (102);
between the muzzle jaws (1000, 1002) a closure thread (106) for cooperating with a rotary crown cap (202) for liquid-tight closure of the pouring opening (104) by means of corresponding thread grooves (1070, 1072) in mouthpiece half molds (1064, 1066) of the muzzle jaws (1000, 1002) can be formed, which is formed in the form of a plurality of partially circumferential thread projections (108) which run around the mouthpiece body (102) with a predeterminable thread pitch and project externally relative to the mouthpiece body (102);
the two muzzle jaws (1000, 1002) and the guide disc (1004) being designed such that, in the assembled state of the two muzzle jaws (1000, 1002) on the one hand and of the guide disc (1004) on the other hand, a transition (1045) is formed such that, at the transition (1045) between the two muzzle jaws (1000, 1002) on the one hand and of the guide disc (1004) on the other hand, a discontinuity (110) can be formed being arranged between the pouring opening (104) and the closure thread (106) und circumferentially running around the mouthpiece body (102),
wherein an end portion (1056) of the muzzle jaws (1000, 1002) adjacent the guide disk (1004) is shaped such that an outer end (112) of the discontinuity (110) is inwardly offset from an outer surface (114) between axially adjacent thread projections (108) of the mouthpiece body (102).

11. The tool (1050) according to claim 10, wherein the muzzle jaws (1000, 1002) and the guide disk (1004) are formed and adapted to each other such that a mouthpiece (100) according to one of claims 1 to 7 can be formed therewith.

12. The tool (1050) according to claim 10 or 11, wherein the muzzle jaws (1000, 1002) define an annular concave portion (1056) of the mouthpiece generation mold (1300) at a contact point (1054) to the guide disk (1004), wherein the guide disc (1004) in particular has a guide groove (1068) designed such that a first curvature (R1) of the mouthpiece (100) is greater than a second curvature (R2.12) of the mouthpiece (100) in a boundary region (118) on the guide disc side to the discontinuity (110) in an muzzle jaw-side boundary region (116) to the discontinuity (100).

13. A method of manufacturing a mouthpiece (100) for a bottle (700) having a rotary crown cap closure, the method comprising:
positively receiving a guide disk (1004) in a guide disk receptacle (1052) formed by assembling two muzzle jaws (1000, 1002) therebetween, wherein in the assembled state of the muzzle jaws (1000, 1002) for receiving the guide disk (1004), a mouthpiece generating mold (1300) is bounded by the muzzle jaws (1000, 1002) and the guide disk (1004);
feeding flowable mouthpiece raw material into the mouthpiece generating mold (1300), whereby:
a mouthpiece body (102) is formed between the muzzle jaws (1000, 1002) ;
an end pouring opening (104) on said mouthpiece body (102) is bounded by said guide disk (1004);
a closure thread (106) is formed between the muzzle jaws (1000, 1002) for cooperation with a rotary crown cap (202) for liquid-tight closure of the pouring opening (104), which closure thread is formed in the form of a plurality of thread projections (108) which run around the mouthpiece body (102) partially circumferentially with a predetermined thread pitch and project externally with respect to the mouthpiece body (102);
at a transition (1054) between the two muzzle jaws (1000, 1002) on the one hand and the guide disc (1004) on the other hand, a discontinuity (110) is formed which is arranged between the pouring opening (104) and the closure thread (106) and runs circumferentially around the mouthpiece body (102), wherein an end portion (1056) of the muzzle jaws (1000, 1002) adjacent the guide disk (1004) is formed such that an outer end (112) of the discontinuity (110) is inwardly offset from an outer surface (114) between axially adjacent thread projections (108) of the mouthpiece body (102);
at least partially solidifying the mouthpiece raw material fed into the mouthpiece generation mold (1300), thereby forming the mouthpiece (100); and
separating the muzzle jaws (1000, 1002) and removing the guide disc (1004) to remove the mouthpiece (100).

14. The method of manufacturing a bottle (700) having a rotary crown cap closure, the method comprising:
manufacturing a mouthpiece (100) of the bottle (700) according to claim 13;
forming a bottle body (702) connected to the mouthpiece (100) and integrally formed therewith;
molding a rotary crown cap (202) onto the mouthpiece body (102) and the closure thread (106) by forming a counter-thread on the molded rotary crown cap (202) such that the rotary crown cap (202) closes the pouring opening (104) in a liquid-tight manner and encloses a portion of the mouthpiece body (102) such that the counter-thread (204) cooperates with the closure thread (106).

## Revendications

1. Embout (100) pour une bouteille (700) avec fermeture à capsule à vis, l'embout (100) présentant:
un corps d'embout (102) avec une ouverture de déversement (104) côté extrémité;
un filetage de fermeture (106) pour la coopération avec une capsule à vis (202) pour la fermeture étanche aux liquides de l'ouverture de déversement (104), qui est réalisé sous la forme de plusieurs porte-à-faux de filetage (108) en porte-à-faux côté extérieur par rapport au corps d'embout (102) et s'étendant sur une partie de la circonférence avec un pas de filetage pouvant être prédéfini autour du corps d'embout (102);
l'embout (100) présentant en outre
une discontinuité (110) disposée entre l'ouverture de déversement (104) et le filetage de fermeture (106), s'étendant sur la circonférence autour du corps d'embout (102), qui est créée lors de la fabrication de l'embout (100) conditionnée par l'outil au niveau d'une transition entre deux joues d'ouverture (1000, 1002) d'un côté et un disque de guidage (1004) de l'autre côté en ce que les deux joues d'ouverture (1000, 1002) et le disque de guidage (1004) sont réalisés de sorte que, à l'état assemblé des deux joues d'ouverture (1000, 1002) et du disque de guidage (1004), une transition (1045) soit réalisée de sorte que la discontinuité (110) s'étendant sur la circonférence autour du corps d'embout (102) puisse être réalisée au moyen de l'amenée de matériau brut d'embout fluide au niveau de la transition (1054) entre les deux joues d'ouverture (1000, 1002) d'un côté et le disque de guidage (1004) de l'autre côté, **caractérisé en ce que**
une extrémité côté extérieur (112) de la discontinuité (110) réalise un bord extérieur décalé vers l'intérieur de la discontinuité (110) et est décalée en conséquence par rapport à une surface extérieure (114) entre des porte-à-faux de filetage (108) axialement adjacents du corps d'embout (102) vers l'intérieur en direction d'un axe central de l'embout (100).

2. Embout (100) selon la revendication 1, **caractérisé en ce que** la discontinuité (110) est un gradin ou une arête.

3. Embout (100) selon la revendication 1 ou 2, **caractérisé en ce qu'**une surface extérieure annulaire (116) du corps d'embout (102) entre le filetage de fermeture (106) et la discontinuité (110) est basculée vers l'intérieur ou courbée vers l'intérieur par rapport à une surface extérieure annulaire (114) du corps d'embout (102) entre des porte-à-faux de filetage (108) axialement adjacents.

4. Embout (100) selon l'une quelconque des revendications 1 à 3, **caractérisé en ce qu'**une surface extérieure annulaire (116) du corps d'embout (102), qui s'étend à partir de la discontinuité (110) en direction du filetage de fermeture (106), est réalisée de manière convexe.

5. Embout (100) selon la revendication 4, **caractérisé en ce que** la surface extérieure annulaire (116) convexe du corps d'embout (102), qui s'étend à partir de la discontinuité (110) en direction du filetage de fermeture (106), a un premier rayon de courbure (R2.12) et **en ce qu'**une surface extérieure annulaire convexe (118) du corps d'embout (102), qui s'étend à partir de la discontinuité (110) en direction de l'ouverture de déversement (104), a un second rayon de courbure (R1),
en particulier le premier rayon de courbure (R2.12) étant supérieur au second rayon de courbure (R1).

6. Embout (100) selon l'une quelconque des revendications 1 à 5, **caractérisé en ce que** la discontinuité (110) a une extension radiale (d), en particulier une extension horizontale radiale, dans une plage entre 0,05 mm et 0,25 mm, en particulier dans une plage entre 0,1 mm et 0,2 mm, et/ou
**en ce qu'**un décalage (s) entre l'extrémité côté extérieur (112) de la discontinuité (110) et la surface extérieure (114) du corps d'embout (102) entre des porte-à-faux de filetage (108) axialement adjacents se trouve dans une plage entre 0,1 mm et 0,4 mm, en particulier dans une plage entre 0,2 mm et 0,3 mm, et/ou
**en ce que** la discontinuité (110) de l'ouverture de déversement (104) a une distance axiale (I) dans une plage entre 0,6 mm et 1,0 mm, en particulier dans une plage entre 0,7 mm et 0,9 mm.

7. Embout (100) selon l'une quelconque des revendications 1 à 6, **caractérisé en ce qu'**à l'exception de la section axiale entre le filetage de fermeture (106) et l'ouverture de déversement (104), l'ensemble de l'embout est fabriqué en tant qu'embout de capsule à vis 26 H 126 conformément à la spécification CE.T.I.E GME 14.02 dans l'édition 07/03.

8. Bouteille (700), en particulier bouteille en verre, présentant un embout (100) selon l'une quelconque des revendications 1 à 7 et un corps de bouteille (702) qui est raccordé à celui-ci et réalisé d'un seul tenant avec celui-ci.

9. Bouteille (700) selon la revendication 8, présentant une capsule à vis (202) qui coopère avec le filetage de fermeture (106) en fermant l'ouverture de déversement (104) de manière étanche aux liquides et en entourant une section du corps d'embout (102) en tant que contre-filetage (204), **caractérisé en ce que** la capsule à vis (202) présente en particulier un capuchon en tôle (206) avec une couche d'étanchéité (208) côté intérieur, laquelle couche d'étanchéité (208) ferme l'ouverture de déversement (104) de manière étanche aux liquides, et lequel capuchon en tôle (206) présente le contre-filetage (204) au niveau d'un côté intérieur mettant en prise le filetage de fermeture (106), le corps de bouteille (702) étant rempli en particulier d'un liquide, en particulier d'une boisson.

10. Outil (1050) pour la fabrication d'un embout (100) pour une bouteille (700) avec fermeture à capsule à vis, **caractérisé en ce que** l'outil (1050) présente:
deux joues d'ouverture (1000, 1002); et
un disque de guidage (1004) qui peut être reçu par complémentarité de forme dans un logement de disque de guidage (1052), lequel logement de disque de guidage (1052) est réalisé dans un état assemblé des joues d'ouverture (1000, 1002) entre celles-ci;
à l'état assemblé et recevant le disque de guidage (1004) des joues d'ouverture (1000, 1002), un moule de production d'ouverture (1300) moulé étant délimité par les joues d'ouverture (1000, 1002) et le disque de guidage (1004) de sorte qu'au moyen de l'amenée de matériau brut d'embout fluide, en particulier de verre liquide, dans le moule de production d'ouverture (1300) :
un corps d'embout (102) puisse être réalisé entre les joues d'ouverture (1000, 1002);
une ouverture de déversement (104) côté extrémité soit délimitée au niveau du corps d'embout (102) au moyen du disque de guidage (1004);
un filetage de fermeture (106) pour la coopération avec une capsule à vis (202) pour la fermeture étanche aux liquides de l'ouverture de déversement (104) puisse être réalisé entre les joues d'ouverture (1000, 1002) au moyen de gorges de filetage (1070, 1072) correspondantes dans des demi-moules d'embout (1064, 1066) des joues d'ouverture (1000, 1002), qui est réalisé sous la forme de plusieurs porte-à-faux de filetage (108) en porte-à-faux côté extérieur par rapport au corps d'embout (102) et s'étendant sur une partie de la circonférence avec un pas de filetage pouvant être prédéfini autour du corps d'embout (102);
les deux joues d'ouverture (1000, 1002) et le disque de guidage (1004) étant réalisés de sorte que, à l'état assemblé des deux joues d'ouverture (1000, 1002) d'un côté et du disque de guidage (1004), une transition (1045) soit réalisée de sorte qu'une discontinuité (110) s'étendant sur la circonférence autour du corps d'embout (102), disposée entre l'ouverture de déversement (104) et le filetage de fermeture (106) puisse être réalisée au niveau de la transition (1054) entre les deux joues d'ouverture (1000, 1002) d'un côté et le disque de guidage (1004) de l'autre côté,
une section d'extrémité (1056) adjacente au disque de guidage (1004) des joues d'ouverture (1000, 1002) étant formée de sorte qu'une extrémité côté extérieur (112) de la discontinuité (110) soit décalée par rapport à une surface extérieure (114) entre des porte-à-faux de filetage (108) axialement adjacents du corps d'embout (102) vers l'intérieur.

11. Outil (1050) selon la revendication 10, **caractérisé en ce que** les joues d'ouverture (1000, 1002) et le disque de guidage (1004) sont réalisés et adaptés l'un à l'autre de sorte qu'un embout (100) puisse être réalisé avec ceux-ci selon l'une quelconque des revendications 1 à 7.

12. Outil (1050) selon la revendication 10 ou 11, **caractérisé en ce que** les joues d'ouverture (1000, 1002) délimitent, au niveau d'un point de contact (1054) avec le disque de guidage (1004), une section concave annulaire (1056) du moule de production d'ouverture (1300), le disque de guidage (1004) présentant en particulier une rainure de guidage (1068) réalisée de sorte qu'une première courbure (R1) de l'embout (100) dans une zone limite côté disque de guidage (118) avec la discontinuité (110) soit supérieure à une seconde courbure (R2.12) de l'embout (100) dans une zone limite côté joues d'ouverture (116) avec la discontinuité (100).

13. Procédé de fabrication d'un embout (100) pour une bouteille (700) avec fermeture à capsule à vis, **caractérisé en ce que** le procédé présente:
la réception par complémentarité de forme d'un disque de guidage (1004) dans un logement de disque de guidage (1052), qui est réalisé par assemblage de deux joues d'ouverture (1000, 1002) entre celles-ci, à l'état assemblé et recevant le disque de guidage (1004) des joues d'ouverture (1000, 1002), un moule de production d'ouverture (1300) étant délimité par les joues d'ouverture (1000, 1002) et le disque de guidage (1004);
l'amenée de matériau brut d'embout fluide dans le moule de production d'ouverture (1300), moyennant quoi:
un corps d'embout (102) est réalisé entre les joues d'ouverture (1000, 1002);
une ouverture de déversement (104) côté extrémité est délimitée au niveau du corps d'embout (102) au moyen du disque de guidage (1004);
un filetage de fermeture (106) pour la coopération avec une capsule à vis (202) pour la fermeture étanche aux liquides de l'ouverture de déversement (104) est réalisé entre les joues d'ouverture (1000, 1002), qui est réalisé sous la forme de plusieurs porte-à-faux de filetage (108) en porte-à-faux côté extérieur par rapport au corps d'embout (102) et s'étendant sur une partie de la circonférence avec un pas de filetage prédéfini autour du corps d'embout (102);
une discontinuité (110) s'étendant sur la circonférence autour du corps d'embout (102), disposée entre l'ouverture de déversement (104) et le filetage de fermeture (106) est réalisée au niveau d'une transition (1054) entre les deux joues d'ouverture (1000, 1002) d'un côté et le disque de guidage (1004) de l'autre côté, une section d'extrémité (1056) adjacente au disque de guidage (1004) des joues d'ouverture (1000, 1002) étant formée de sorte qu'une extrémité côté extérieur (112) de la discontinuité (110) soit décalée par rapport à une surface extérieure (114) entre des porte-à-faux de filetage (108) axialement adjacents du corps d'ouverture (102) vers l'intérieur;
la solidification au moins partielle du matériau brut d'embout amené dans le moule de production d'ouverture (1300), avec lequel l'embout (100) est réalisé; et
la séparation des joues d'ouverture (1000, 1002) et le retrait du disque de guidage (1004) pour l'enlèvement de l'embout (100).

14. Procédé de fabrication d'une bouteille (700) avec fermeture à capsule à vis, **caractérisé en ce que** le procédé présente:
la fabrication d'un embout (100) de la bouteille (700) selon la revendication de procédé 13;
la réalisation d'un corps de bouteille (702) raccordé à l'embout (100) et réalisé d'un seul tenant avec celui-ci;
le moulage d'une capsule à vis (202) sur le corps d'embout (102) et le filetage de fermeture (106) par réalisation d'un contre-filetage au niveau de la capsule à vis (202) moulée de sorte que la capsule à vis (202) ferme l'ouverture de déversement (104) de manière étanche aux liquides et entoure une section du corps d'embout (102) de sorte que le contre-filetage (204) coopère avec le filetage de fermeture (106).
